# EUROPÄISCHE PATENTSCHRIFT

(11) **EP 3 933 188 B1**
(45) Veröffentlichungstag und Bekanntmachung des Hinweises auf die Patenterteilung: **19.11.2025**
(21) Anmeldenummer: 21177027.6
(22) Anmeldetag: 01.06.2021
(51) Int. Cl.: F02M 25/08, F02D 41/00

(54) **KRAFTSTOFFDAMPFFILTERSPÜLUNG EINER AUFGELADENEN BRENNKRAFTMASCHINE IM SAUGBETRIEB**
FUEL VAPOUR FILTER FLUSHING OF A SUPERCHARGED COMBUSTION ENGINE DURING NATURAL ASPIRATION
RINÇAGE DE FILTRE À VAPEUR DE CARBURANT D'UN MOTEUR À COMBUSTION INTERNE CHARGÉ EN MODE ASPIRATION NATURELLE

(30) Priorität: 01.07.2020 DE 102020208229
(43) Veröffentlichungstag der Anmeldung: 05.01.2022
(73) Patentinhaber: VOLKSWAGEN AG, 38440 Wolfsburg (DE)
(72) Erfinder: Niehoff, Alexander, 38446 Wolfsburg (DE); Mazur, Michael, 30519 Hannover (DE); Behrendt, Stefan, 38118 Braunschweig (DE); Gottschalk, Wolfram, 39122 Magdeburg (DE); Grabowski, Roman, 38542 Leiferde (DE)
(74) Vertreter: Bungartz, Florian

(56) Entgegenhaltungen:
- DE-A1- 102011 018 863
- DE-A1- 102015 206 507
- US-A1- 2007 239 330
- US-A1- 2020 003 162
- US-B2- 10 533 524

## Beschreibung

Die Erfindung betrifft ein Verfahren zum Betreiben einer Brennkraftmaschine mit einem Kraftstofftanksystem, das entlüftet werden kann. Die Brennkraftmaschine kann insbesondere Teil eines Kraftfahrzeugs sein.

Ein Kraftstofftanksystem für eine Brennkraftmaschine eines Kraftfahrzeugs kann eine Tankentlüftungsleitung aufweisen, die es ermöglicht, einen ansteigenden Druck in dem Kraftstofftank des Kraftstofftanksystems infolge von beispielsweise bei relativ hohen Umgebungstemperaturen verdampfendem Kraftstoff an die Umgebung zu entlasten. Dabei dürfen, auch aufgrund von Emissionsvorschriften, möglichst keine Kraftstoffdämpfe in die Umgebung gelangen. Dies wird verhindert, indem in die Tankentlüftungsleitung ein Kraftstoffdampffilter integriert ist, der die Kraftstoffdämpfe absorbiert. Ein solcher Kraftstoffdampffilter ist häufig in Form eines Aktivkohlefilters ausgebildet.

Zur Regeneration eines solchen Kraftstoffdampffilters ist ein entsprechendes Kraftstofftanksystem üblicherweise zusätzlich mit einer Spülgasleitung versehen, die einerseits mit dem Kraftstoffdampffilter und andererseits mit dem Frischgasstrang der Brennkraftmaschine verbunden ist. Im Betrieb der Brennkraftmaschine kann zeitweise mittels Unterdrucks, der im Bereich der Mündung der Spülgasleitung in den Frischgasstrang im Vergleich zu dem Umgebungsdruck herrscht, Umgebungsluft über eine Verbindung des Kraftstoffdampffilters zur Umgebung angesaugt werden. Diese Umgebungsluft durchströmt den Kraftstoffdampffilter in Gegenrichtung zu derjenigen Strömungsrichtung, in der die Kraftstoffdämpfe aus dem Kraftstofftank in den Kraftstoffdampffilter strömen, und spült diesen dadurch. Die Kraftstoffdämpfe aus dem Kraftstoffdampffilter werden so über den Frischgasstrang den Brennräumen des Verbrennungsmotors der Brennkraftmaschine zugeführt.

Die DE 10 2017 216 728 B3 offenbart eine mittels eines Abgasturboladers aufgeladene Brennkraftmaschine mit einem Kraftstofftanksystem, wobei sich die dazugehörige Spülgasleitung stromab des Tankentlüftungsventils in zwei Teilstränge aufteilt, von denen ein erster stromab des Frischgasverdichters des Abgasturboladers in den Frischgasstrang mündet, während der zweite Teilstrang in eine Venturidüse mündet, die in einen Bypass zu dem Frischgasverdichter integriert ist. In die beiden Teilstränge ist weiterhin jeweils ein Rückschlagventil integriert, das bei einem Überdruck auf der Seite des Tankentlüftungsventils öffnet.

Die DE 10 2016 224 973 A1 offenbart ebenfalls eine mittels eines Abgasturboladers aufgeladene Brennkraftmaschine mit einem Kraftstofftanksystem, wobei sich die dazugehörige Spülgasleitung stromab eines Tankentlüftungsventils in zwei Teilstränge aufteilt, von denen ein erster Teilstrang stromab des Frischgasverdichters und ein zweiter Teilstrang stromauf des Frischgasverdichters in den Frischgasstrang mündet. Die Mündung des zweiten Teilstrangs ist dabei stromab eines Differenzdruckventils, mittels dessen ein relativ geringer Druck des Frischgases stromab des Differenzdruckventils einstellbar ist, angeordnet. Die Brennkraftmaschine umfasst weiterhin eine Abgasrückführleitung, die stromab einer Abgasturbine aus dem Abgasstrang der Brennkraftmaschine abzweigt und die in den Abschnitt des Frischgasstrangs, der zwischen dem Differenzdruckventil und der Mündung des zweiten Teilstrangs der Spülgasleitung gelegen ist, mündet. Soll während eines Saugbetriebs der Brennkraftmaschine ein Spülen eines Kraftstoffdampffilters des Kraftstofftanksystems durchgeführt werden, erfolgt ein Einleiten des dabei über die Spülgasleitung geführten Spülgases über den ersten Teilstrang und damit in einen stromab des Frischgasverdichters gelegenen Abschnitt des Frischgasstrangs, weil dann ein ausreichendes Druckgefälle über diesem ersten Teilstrang vorliegt. Während eines Verdichtungsbetriebs der Brennkraftmaschine erfolgt ein Einleiten des Spülgases dagegen über den zweiten Teilstrang, wobei dann durch ein ausreichend weitgehendes Schließen des Differenzdruckventils ein ausreichendes Druckgefälle über dem zweiten Teilstrang eingestellt wird.

Eine Brennkraftmaschine mit zwei Spülgasleitungen, von denen eine erste stromauf und eine zweite stromab eines Frischgasverdichters in einen Frischgasstrang mündet, ist zudem in der US 2007/239330 A1 offenbart. Ein weiteres Verfahren ist aus der Druckschrift DE 10 2011 018863 A1 bekannt.

Der Erfindung liegt die Aufgabe zugrunde, ein vorteilhaftes Spülen eines Kraftstoffdampffilters eines Kraftstofftanksystems einer aufgeladenen Brennkraftmaschine zu realisieren.

Die Lösung dieser Aufgabe wird durch ein Verfahren zum Betreiben einer Brennkraftmaschine gemäß dem Patentanspruch 1 erreicht. Vorteilhafte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein Verfahren zum Betreiben einer Brennkraftmaschine vorgesehen, die zumindest einen Verbrennungsmotor (insbesondere einen Ottomotor oder einen sonstigen, zumindest zeitweise fremdgezündeten Verbrennungsmotor), einen Frischgasstrang zum Zuführen von Frischgas zu dem Verbrennungsmotor und ein Kraftstofftanksystem umfasst. In den Frischgasstrang ist zumindest ein Frischgasverdichter, der insbesondere Teil eines Abgasturboladers sein kann, sowie ein Differenzdruckventil, insbesondere in einer Ausgestaltung als Klappenventil, integriert. Das Kraftstofftanksystem weist zumindest einen Kraftstofftank, einen Kraftstoffdampffilter, der in fluidleitender Verbindung mit der Umgebung steht, eine von dem Kraftstofftank zu dem Kraftstoffdampffilter führende Tankentlüftungsleitung, eine erste, von dem Kraftstoffdampffilter zu dem Frischgasstrang der Brennkraftmaschine führende Spülgasleitung und eine zweite, von dem Kraftstoffdampffilter zu dem Frischgasstrang führende Spülgasleitung auf. Die erste Spülgasleitung mündet dabei in einen ersten Abschnitt des Frischgasstrangs, der stromab des Differenzdruckventils sowie stromauf des Frischgasverdichters gelegen ist, während die zweite Spülgasleitung in einen stromab des Frischgasverdichters liegenden, zweiten Abschnitt des Frischgasstrangs, vorzugsweise in einen (zweiten) Abschnitt, der auch stromab einer in den Frischgasstrang integrierten Drosselvorrichtung, beispielsweise in Form eines Klappenventils (Drosselklappe), mündet. Die erste Spülgasleitung und die zweite Spülgasleitung können dabei vorzugsweise abschnittsweise, insbesondere in einem ersten, von dem Kraftstoffdampffilter ausgehenden Abschnitt, integral ausgebildet sein. Weiterhin kann ein Tankentlüftungsventil zur Einstellung des Massenstroms von aus zumindest einer der Spülgasleitungen in den Frischgasstrang eingeleitetem Spülgas vorgesehen sein. Ein solches Tankentlüftungsventil kann insbesondere in dem vorzugsweise vorgesehenen integralen Abschnitt der beiden Spülgasleitungen angeordnet sein. Erfindungsgemäß ist vorgesehen, dass zumindest zeitweise während eines Saugbetriebs der Brennkraftmaschine mit Kraftstoffdampffilterspülung (d.h. bei gleichzeitiger Spülung des Kraftstoffdampffilters und damit bei Führung von Spülgas über zumindest eine der Spülgasleitungen) das Differenzdruckventil zumindest teilweise geschlossen wird und dadurch Spülgas über die erste Spülgasleitung in den Frischgasstrang eingeleitet wird. Dabei kann insbesondere vorgesehen sein, dass zur gezielten Einstellung eines definierten, über die erste Spülgasleitung zu führenden Spülgasmassenstroms die Schließstellung des Differenzdruckventils variiert beziehungsweise angepasst wird.

Unter dem "Saugbetrieb" einer dieser Erfindung zugrundeliegenden Brennkraftmaschine mit Frischgasverdichtung ist derjenige Betriebszustand zu verstehen, in dem sich das die Intensität der Frischgasverdichtung regelnde Organ in inaktiver Ausgangsposition bzw. Minimalposition, d.h. nicht im aktiven Regelbetrieb, befindet. Dabei kann insbesondere vorgesehen sein, dass in dem Abschnitt des Frischhasstrangs, der zwischen dem Frischgasverdichter und dem Verbrennungsmotor gelegen ist, ein (mittlerer) Druck des Frischgases vorliegt, der im Vergleich zu dem Umgebungsdruck kleiner oder gleichgroß ist.

Das stromauf der Mündung der ersten Spülgasleitung in den Frischgasstrang integrierte Differenzdruckventil soll demnach erfindungsgemäß (auch) genutzt werden, um während eines Saugbetriebs ein Druckgefälle über der ersten Spülgasleitung zu realisieren, so dass bedarfsweise Spülgas über die erste Spülgasleitung geführt werden kann.

Bevorzugt kann vorgesehen sein, dass zumindest zeitweise während des Saugbetriebs mit Kraftstoffdampffilterspülung Spülgas über die zweite Spülgasleitung in den Frischgasstrang eingeleitet wird, was infolge der Sogwirkung des Verbrennungsmotors und insbesondere auch der Drosselvorrichtung im dem unmittelbar stromab davon liegenden Abschnitt, in den die zweite Spülgasleitung vorzugsweise mündet, im Saugbetrieb der Brennkraftmaschine und dem daraus resultierenden Druckgefälle über der zweiten Spülgasleitung vorteilhaft möglich ist. Besonders bevorzugt kann dabei vorgesehen sein, dass ein Führen von Spülgas über die zweite Spülgasleitung gleichzeitig mit einem Führen von Spülgas über die erste Spülgasleitung erfolgt, wodurch während des Saugbetriebs ein relativ großer (Gesamt-)Spülgasmassenstrom realisiert werden kann. Das in diesem Fall zusätzliche Führen von Spülgas über die erste Spülgasleitung kann dabei besonders vorteilhaft sein, weil ein Spülgasmassenstrom, der ausschließlich über die stromab des Frischgasverdichters in den Frischgasstrang mündende (zweite) Spülgasleitung geführt wird, aufgrund des Saugbetriebs relativ stark beschränkt sein kann. Diese Beschränkungen kann sich dabei aus dem Druckverhältnis (Verhältnis des Drucks des Frischgases im Bereich der Mündung der Spülgasleitung zu dem Umgebungsdruck) über der (zweiten) Spülgasleitung, das bei einem Erreichen des kritischen Werts von zwischen 0,52 und 0,53 keine Erhöhung des über die (zweite) Spülgasleitung geführten Spülgases mehr zulässt, ergeben, wobei dieses kritische Druckverhältnis bei relativ hohen Umgebungstemperaturen und relativ geringen Umgebungsdrücken (insbesondere aufgrund eines Betriebs der Brennkraftmaschine in relativ großer geografischer Höhe) relativ früh anliegt und damit einen nur relativ geringen Spülgasmassenstrom über die (zweite) Spülgasleitung zulässt. Ein weiterer Vorteil, der sich aus einem Führen von Spülgas über die erste Spülgasleitung ergeben kann, liegt in einer besseren Vermischung des Spülgases mit der Luft infolge der relativ weiten Führung des (dann zumindest die Luft und das Spülgas umfassenden) Frischgases in dem Frischgasstrang bis zum Erreichen des Verbrennungsmotors.

Da mit einem zumindest teilweisen Schließen des Differenzdruckventils, das während des Saugbetriebs der Brennkraftmaschine mit Kraftstoffdampffilterspülung durchgeführt werden kann, um Spülgas über die erste Spülgasleitung in den Frischgasstrang einzuleiten, ein Druckverlust in dem über den Frischgasstrang geführten Frischgas einhergeht, der sich negativ auf das Betriebsverhalten der Brennkraftmaschine auswirken kann, kann vorzugsweise vorgesehen sein, Spülgas nur dann gezielt über die erste Spülgasleitung zu führen, wenn dieses nicht in einem ausreichend großen Massenstrom über die zweite Spülgasleitung geführt werden kann. Dementsprechend kann im Rahmen eines erfindungsgemäßen Verfahrens vorgesehen sein, dass während des Saugbetriebs mit Kraftstoffdampffilterspülung das Differenzdruckventil nur dann mit dem Ziel, ein Führen von Spülgas über die erste Spülgasleitung zu realisieren, geschlossen wird, sofern ein in den Frischgasstrang einzuleitender Sollgesamtspülgasmassenstrom oberhalb eines Grenzwerts liegt, wobei dieser Grenzwert ein maximal in dem vorliegenden Betriebszustand der Brennkraftmaschine über die zweite Spülgasleitung führbaren Spülgasmassenstrom definiert. Der vorliegende Betriebszustand ist dabei sowohl durch innere Betriebsparameter, insbesondere die Last und die Drehzahl, mit der der Verbrennungsmotor betrieben wird, als auch durch äußere Betriebsparameter, insbesondere die Temperatur und den Druck der Umgebungsluft, beeinflusst.

Vor diesem Hintergrund kann im Rahmen eines erfindungsgemäßen Verfahrens vorgesehen sein, dass während des Saugbetriebs mit Kraftstoffdampffilterspülung das Differenzdruckventil zeitweise weitestmöglich geöffnet wird, sofern der Sollgesamtspülgasmassenstrom unterhalb des Grenzwerts liegt. Dadurch kann eine möglichst geringe Drosselung der Frischgasströmung durch das Differenzdruckventil realisiert werden, sofern eine solche Drosselung nicht gewollt und auch nicht benötigt ist. Dies kann folglich insbesondere dann der Fall sein, wenn das Differenzdruckventil ausschließlich dafür vorgesehen ist, bedarfsweise ein Druckgefälle über der ersten Spülgasleitung zu realisieren, um ein Führen von Spülgas über die erste Spülgasleitung zu ermöglichen. Gegebenenfalls kann ein zumindest teilweises Schließen des Differenzdruckventils und die daraus resultierende Erzeugung eines lokal relativ geringen Drucks des Frischgases jedoch auch für andere Zwecke sinnvoll sein. In diesem Fall sollte ein solches Schließen des Differenzdruckventils vorzugsweise dann nicht in einem Maß erfolgen, der (für ein gezieltes Führen von Spülgas über die erste Spülgasleitung) über dem liegt, der für die anderen Zwecke erforderlich ist.

Ein solcher anderer Zweck, dem ein zumindest teilweises Schließen des Differenzdruckventils dienen kann, kann insbesondere die Realisierung einer Abgasrückführung sein. Eine entsprechende im Rahmen eines erfindungsgemäßen Verfahrens nutzbare Brennkraftmaschine kann dazu eine Abgasrückführleitung umfassen, die von einem Abgasstrang der Brennkraftmaschine, der einem Abführen von Abgas von dem Verbrennungsmotor und einem Einleiten zumindest eines Teils dieses Abgases in die Umgebung dient, zu dem ersten Abschnitt des Frischgasstrangs, der stromab des Differenzdruckventils sowie stromauf des Frischgasverdichters liegt, führt. Die Abgasrückführleitung kann dabei, zur Realisierung einer sogenannten Niederdruckabgasrückführung, insbesondere stromab einer Abgasturbine aus dem Abgasstrang abgehen. Bevorzugt kann in diese Abgasrückführleitung zudem ein Abgasrückführventil integriert sein, das dazu vorgesehen und eingerichtet ist, einen über die Abgasrückführleitung geführten Abgasmassenstrom einzustellen. Ein erfindungsgemäßes Verfahren zum Betreiben einer solchen Brennkraftmaschine kann vorsehen, dass zumindest zeitweise während des Saugbetriebs mit Kraftstoffdampffilterspülung (zur Realisierung einer Abgasrückführung) Abgas über die Abgasrückführleitung geführt wird, wobei der dabei über die Abgasrückführleitung geführte Abgasmassenstroms mittels des Abgasrückführventils eingestellt, insbesondere geregelt eingestellt wird. Dabei kann besonders bevorzugt vorgesehen sein, dass ein Einfluss der Schließstellung des Differenzdruckventils, die in Abhängigkeit von einem Spülgasmassenstrom, der über die erste Spülgasleitung in den Frischgasstrang eingeleitet werden soll, eingestellt wird und den diese Schließstellung auf den Abgasmassenstrom hat, mittels des Abgasrückführventils kompensiert wird. Die Schließstellung des Differenzdruckventils soll dann folglich ausschließlich in Abhängigkeit von dem über die erste Spülgasleitung zu führenden Spülgasmassenstrom und dem dafür erforderlichen Druckgefälle über der ersten Spülgasleitung gewählt werden, während der unvermeidliche (aber auch gewollte) Einfluss, den das zumindest teilweise geschlossene Differenzdruckventil beziehungsweise der von diesem erzeugte relativ geringe, lokale Druck auf den über die Abgasrückführleitung geführten Abgasmassenstrom hat, durch eine entsprechende Ansteuerung des Abgasrückführventils bei der Einstellung des Abgasmassenstroms berücksichtigt wird.

Die Brennkraftmaschine, die im Rahmen eines erfindungsgemäßen Verfahrens zum Einsatz kommt, kann insbesondere Teil eines Kraftfahrzeugs sein. Dabei kann der Verbrennungsmotor der Brennkraftmaschine insbesondere zur direkten oder indirekten Bereitstellung der Antriebsleistung für das Kraftfahrzeug vorgesehen sein. Bei dem Kraftfahrzeug kann es sich insbesondere um ein radbasiertes und nicht schienengebundenen Kraftfahrzeug (vorzugsweise ein PKW oder ein LKW oder eine vergleichbare mobile Arbeitsmaschine) handeln.

Die Bezeichnung "Kraftstoffdampffilter" bedingt erfindungsgemäß nicht, dass dieser den flüchtigen Kraftstoff in gasförmiger Form filtern muss beziehungsweise absorbieren. Vielmehr kann der Kraftstoff bei der Filterung auch schon wieder (teilweise) auskondensiert sein.

Die vorliegende Erfindung wird nachfolgend anhand eines in der Zeichnung dargestellten Ausgestaltungsbeispiels näher erläutert. In der Zeichnung zeigt:

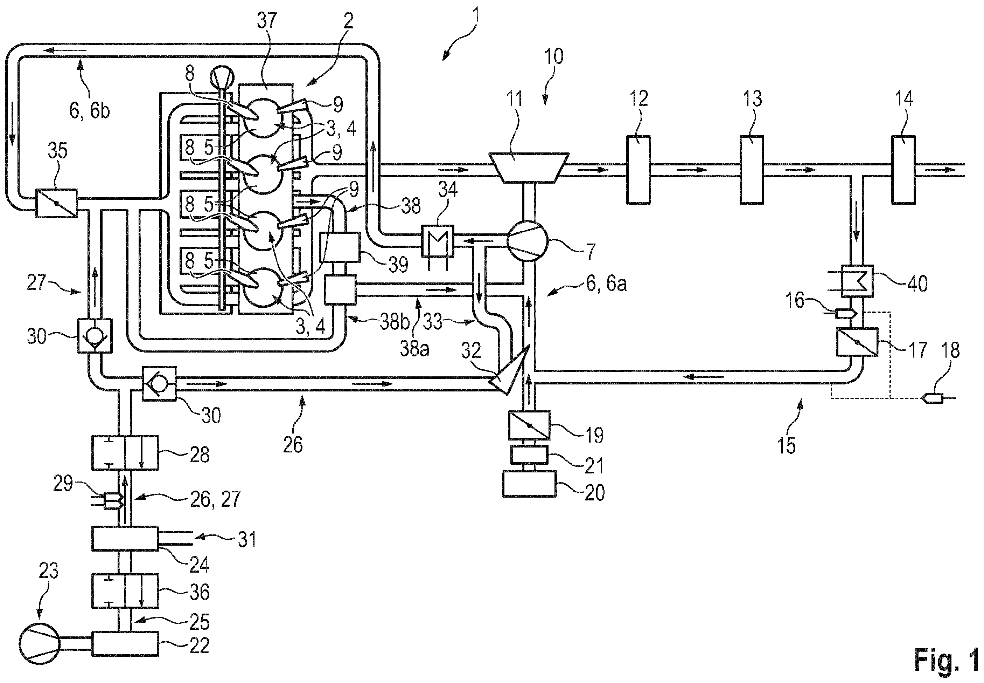

Fig. 1: eine erfindungsgemäße Brennkraftmaschine in vereinfachter Darstellung.

Die Fig. 1 zeigt in vereinfachter Darstellung eine im Rahmen eines erfindungsgemäßen Verfahrens verwendbare Brennkraftmaschine 1. Diese weist einen Verbrennungsmotor 2 auf, in dem eine Mehrzahl von Brennräumen 3 ausgebildet sind. Im Betrieb der Brennkraftmaschine 1 wird in bekannter Weise in definierter Reihenfolge in den Brennräumen 3, die teilweise von Zylindern 4 des Verbrennungsmotors 2 sowie von darin beweglich geführten Kolben 5 begrenzt sind, Gemischmengen verbrannt, wobei die so erzeugten Druckerhöhungen in den Brennräumen 3 dazu genutzt werden, die Kolben 5 zu bewegen. Diese Bewegungen der Kolben 5 werden unter Zwischenschaltung von Pleueln (nicht dargestellt) in eine Drehbewegung einer Kurbelwelle (nicht dargestellt) gewandelt, wobei die Führung der Kolben 5 über die Pleuel mittels der Kurbelwelle gleichzeitig zu einer zyklischen Hin-und-her-Bewegung der Kolben 5 führt.

Die zur Verbrennung in den Brennräumen 3 vorgesehenen Gemischmengen umfassen einerseits Frischgas, das vollständig oder hauptsächlich aus Umgebungsluft besteht, die aus der Umgebung angesaugt wird, und das dem Verbrennungsmotor 2 über einen Frischgasstrang 6 zugeführt wird. Das Frischgas wird dabei über einen in den Frischgasstrang 6 integrierten Frischgasverdichter 7 eines Abgasturboladers geführt, mittels dessen in einem Verdichtungsbetrieb der Brennkraftmaschine 1 eine Verdichtung des Frischgases bewirkt werden kann. Die Gemischmengen umfassen weiterhin Kraftstoff, der direkt mittels Kraftstoffinjektoren 8 in die Brennräume 3 eingebracht und mittels Zündvorrichtungen 9 gezündet und damit verbrannt werden kann. Das bei der Verbrennung der Frischgas-Kraftstoff-Gemischmengen in den Brennräumen 3 entstandene Abgas wird über einen Abgasstrang 10 abgeführt und durchströmt dabei eine Abgasturbine 11 des Abgasturboladers und anschließend mehrere Abgasnachbehandlungsvorrichtungen, beispielsweise zunächst einen ersten Dreiwegekatalysator 12, dann einen Partikelfilter 13 und abschließend einen zweiten Dreiwegekatalysator 14.

Zumindest zeitweise während eines Betriebs des Verbrennungsmotors 2 kann ein Teil des Abgases, das über den Abgasstrang 10 geführt wird, über eine Abgasrückführleitung 15 in den Frischgasstrang 6 eingeleitet werden. Diese Abgasrückführleitung 15, in die ein Abgaskühler 40, ein Temperatursensor 16, ein Abgasrückführventil 17 sowie ein Differenzdrucksensor 18 integriert sind, zweigt stromab der Abgasturbine 11 und konkret aus einem Abschnitt, der zwischen dem Partikelfilter 13 und dem zweiten Dreiwegekatalysator 14 angeordnet ist, aus dem Abgasstrang 10 ab und mündet stromauf des Frischgasverdichters 7 in den Frischgasstrang 6, konkret in einen Abschnitt des Frischgasstrangs 6, der stromauf des Frischgasverdichters 7 und stromab eines Differenzdruckventils 19 angeordnet ist.

Stromauf des Differenzdruckventils 19 ist in den Frischgasstrang 6 noch ein Luftfilter 20 und ein dem Luftfilter 20 nachgelagerter Luftmassensensor 21 integriert.

Der mittels der Kraftstoffinjektoren 8 in die Brennräume 3 einzubringende Kraftstoff stammt aus einem Kraftstofftank 22 eines Kraftstofftanksystems der Brennkraftmaschine 1. Dieses Kraftstofftanksystem umfasst neben dem Kraftstofftank 2, an den ein Tankleckdiagnosemodul 23 angeschlossen ist, einen Kraftstoffdampffilter 24, der insbesondere in Form eines Aktivkohlefilters ausgebildet sein oder einen solchen umfassen kann und der über eine Tankentlüftungsleitung 25 mit dem Kraftstofftank 22 verbunden ist. Der Kraftstoffdampffilter 24 ist weiterhin über zwei Spülgasleitungen 26, 27 mit dem Frischgasstrang 6 der Brennkraftmaschine 1 verbunden, wobei diese zwei Spülgasleitungen 26, 27 in einem ersten, von dem Kraftstoffdampffilter 24 abgehenden Abschnitt, integral ausgebildet sind. In diesen integralen Abschnitt der zwei Spülgasleitungen 26, 27 sind ein aktiv ansteuerbares Tankentlüftungsventil 28 sowie, zwischen dem Kraftstoffdampffilter 24 und dem Tankentlüftungsventil 28, ein kombinierter Druck- und Temperatursensor 29 integriert, während in die separierten Abschnitte der beiden Spülgasleitungen 26, 27 jeweils ein Rückschlagventil 30 integriert ist, das bei einem Unterdruck auf der Seite des Tankentlüftungsventils 28 selbsttätig schließt. Eine erste der Spülgasleitungen 26, 27, die Spülgasleitung 26, mündet stromauf des Frischgasverdichters 7 in den Frischgasstrang 6 und konkret in den (ersten) Abschnitt 6a des Frischgasstrangs 6, der zwischen dem Differenzdruckventil 19 und dem Frischgasverdichter 7 gelegen ist, dabei jedoch an einer Stelle stromab der Mündung der Abgasrückführleitung 15.

Die Mündung der ersten Spülgasleitung 26 in den Frischgasstrang 6 erfolgt (indirekt) über eine Venturidüse 32, wobei ein Auslass der Venturidüse 32 in den Frischgasstrang 6 mündet, während ein Haupteinlass der Venturidüse 32 mit einer Treibleitung 33 verbunden ist, die stromab des Frischgasverdichters 7 aus dem Frischgasstrang 6 abgeht. Die erste Spülgasleitung 26 mündet in einen Nebeneinlass der Venturidüse 32, der im Bereich einer Querschnittsverringerung der Venturidüse 32 angeordnet ist. Mittels einer Frischgasströmung, die, aus der Treibleitung 33 kommend, die Venturidüse 32 durchströmt, kann Spülgas über die erste Spülgasleitung 26 und den Nebeneinlass der Venturidüse 32 angesaugt werden.

Die zweite Spülgasleitung 27 mündet stromab des Frischgasverdichters 7 und auch stromab eines Ladeluftkühlers 34 sowie einer Drosselklappe 35 in einen zweiten Abschnitt 6b des Frischgasstrangs 6.

Der Kraftstoffdampffilter 24 steht mit seiner bezüglich der Tankentlüftungsleitung 25 abgewandten Seite (bezogen auf dessen Filterwirkung für Kraftstoffdämpfe) über eine Umgebungsluftleitung 31 mit der Umgebung in gasleitender Verbindung.

Der Kraftstofftank 22 ist mit Kraftstoff gefüllt, wobei ein Teil dieses eigentlich flüssigen Kraftstoffs in der Regel verdampft ist, so dass in dem Kraftstofftank 22 auch Kraftstoff in gasförmigem Aggregatzustand vorliegt. Ein solches Verdampfen von Kraftstoff in dem Kraftstofftank 22 tritt insbesondere bei relativ hohen Umgebungstemperaturen sowie bei einem relativ geringen Umgebungsdruck, beispielsweise infolge einer Bergfahrt eines die Brennkraftmaschine 1 umfassenden Kraftfahrzeugs, auf, weil sich durch ein Absenken des Umgebungsdrucks die Verdampfungstemperaturen der verschiedenen Kraftstoffbestandteile entsprechenden den dazugehörigen Dampfdruckkurven verringern. Um einen durch ein solches Verdampfen hervorgerufenen, unzulässig hohen Überdruck in dem Kraftstofftank 22 zu vermeiden, ist die Möglichkeit eines Druckausgleichs mit dem Umgebungsdruck über die Tankentlüftungsleitung 25, den Kraftstoffdampffilter 24 und die Umgebungsluftleitung 31 gegeben, wobei durch den Kraftstoffdampffilter 24 vermieden wird, dass ein solcher Druckausgleich zu einem Entweichen von Kraftstoffdämpfen in die Umgebung führt.

Ein Entlüften des Kraftstofftanks 22 führt zu einer zunehmenden Sättigung des Kraftstoffdampffilters 24, was wiederum bedingt, diesen zeitweise zu regenerieren. Hierzu ist ein Spülen des Kraftstoffdampffilters 24 vorgesehen, indem Umgebungsluft über die Umgebungsluftleitung 31 angesaugt wird. Diese Umgebungsluft durchströmt den Kraftstoffdampffilter 24, wodurch in dem Kraftstoffdampffilter 24 absorbierte Kraftstoffmoleküle durch die Umgebungsluft mitgenommen und über zumindest eine der Spülgasleitungen 26, 27 in den Frischgasstrang 6 eingeleitet werden. Dabei kann der Massenstrom des Spülgases mittels des Tankentlüftungsventils 28 gezielt eingestellt werden. Durch das Einleiten des Spülgases und der darin enthaltenen Kraftstoffmoleküle werden diese den Brennräumen 3 des Verbrennungsmotors 2 zur thermischen Verwertung beziehungsweise Verbrennung zugeführt.

Um während eines Spülens des Kraftstoffdampffilters 24 lediglich Umgebungsluft über die Umgebungsluftleitung 31 und nicht zusätzlich auch Kraftstoffdämpfe über die Tankentlüftungsleitung 25 anzusaugen, kann die Tankentlüftungsleitung 25 mittels eines Tankabsperrventils 36 versperrt werden.

Ein Spülen des Kraftstoffdampffilters 24 ist lediglich temporär, dabei jedoch stets während des Betriebs des Verbrennungsmotors 2 vorgesehen, weil nur dann der durch das Spülen des Kraftstoffdampffilters 24 in den Frischgasstrang 6 eingebrachte Kraftstoff auch sicher den Brennräumen 3 zur Verbrennung zugeführt werden kann. Zudem kann dann ein ausreichendes Druckgefälle über zumindest einer der Spülgasleitungen 26, 27 gewährleistet werden.

Erfindungsgemäß ist vorgesehen, dass bei einem Spülen des Kraftstoffdampffilters 24 während eines Saugbetriebs der Brennkraftmaschine 1 Spülgas sowohl über die erste Spülgasleitung 26 als auch über die zweite Spülgasleitung 27 in den Frischgasstrang 6 eingeleitet wird. Ein ausreichendes Druckgefälle über der zweiten Spülgasleitung 27 liegt dabei grundsätzlich aufgrund der Saugwirkung des Verbrennungsmotors 2 während eines solchen Saugbetriebs an. Ein ausreichendes Spülgefälle auch über der ersten Spülgasleitung 26 wird dagegen dadurch sichergestellt, dass das Differenzdruckventil 19 zumindest teilweise geschlossen wird, wodurch ein Druckabfall über dem Differenzdruckventil 19, d.h. ein Unterdruck auf der stromabwärts gelegenen Seite des Differenzdruckventils 19 im Vergleich zu dem Umgebungsdruck, erzeugt wird. Die Venturidüse 32 unterstützt dabei die Ausbildung eines ausreichenden Druckgefälles über der ersten Spülgasleitung 19 nicht oder lediglich in einem geringen Maße, weil für deren Saugwirkung ein deutlicher Überdruck auf der stromabwärts gelegenen Seite des Frischgasverdichters 7 im Vergleich zu der stromaufwärts gelegenen Seite des Frischgasverdichters 7 erforderlich ist, um Frischgas über die Treibleitung 33 zu führen. Ein solcher Druckanstieg liegt jedoch in einem Saugbetrieb der Brennkraftmaschine nicht vor.

Bei einem Spülen des Kraftstoffdampffilters 24 während eines Verdichtungsbetriebs der Brennkraftmaschine wird das Spülgas dagegen ausschließlich über die erste Spülgasleitung 26 geführt, da das in die zweite Spülgasleitung 27 integrierte Rückschlagventil aufgrund des mittels des Frischgasverdichters 7 erzeugten Überdrucks (im Vergleich zu dem Umgebungsdruck), der in dem Frischgasstrang 6 im Bereich der Mündung der zweiten Spülgasleitung 27 vorliegt, geschlossen ist. Ein ausreichendes Druckgefälle über der ersten Spülgasleitung 26 wird während eines solchen Verdichtungsbetriebs mit Kraftstoffdampffilterspülung einerseits durch die Lage der Mündung der ersten Spülgasleitung 26 beziehungsweise des Auslasses der Venturidüse 32 auf der Niederdruckseite des Frischgasverdichters 7 sowie unterstützend durch die Wirkung der Venturidüse 32 realisiert. Ein zumindest teilweises Schließen des Differenzdruckventils 19 mit dem Ziel, Spülgas über die erste Spülgasleitung 26 zu führen, ist während eines solchen Verdichtungsbetriebs mit Kraftstoffdampffilterspülung nicht erforderlich. Dennoch kann auch dann ein zumindest teilweises Schließen des Differenzdruckventils 19 vorgesehen sein, was dann dem Zweck dient, ein ausreichendes Druckgefälle über der Abgasrückführleitung 15 zu realisieren, um Abgas in einem ausreichenden Maße über die Abgasrückführleitung 15 in den Frischgasstrang 6 einzuleiten. Eine Steuerung und insbesondere Regelung des dabei über die Abgasrückführleitung 15 geführten Abgasmassenstroms kann dann ausschließlich über eine entsprechende Einstellung des Differenzdruckventils 19 oder durch eine kombinierte beziehungsweise durch sich bezüglich ihrer Wirkungen überlagernde Stellungen des Differenzdruckventils 19 und des Abgasrückführventils 17 erreicht werden.

Ist eine Abgasrückführung auch während eines Saugbetriebs der Brennkraftmaschine mit Kraftstoffdampffilterspülung vorgesehen, erfolgt eine Anpassung des über die Abgasrückführleitung 15 geführten Abgasmassenstroms im Rahmen einer Steuerung und insbesondere einer Regelung dieses Abgasmassenstroms dagegen ausschließlich mittels des Abgasrückführventils 17, wobei mittels diesem der Einfluss, den eine Schließstellung des Differenzdruckventils 19, die mit dem Ziel der Erzeugung eines ausreichenden Druckgefälles über der ersten Spülgasleitung 26 eingestellt wurde, kompensiert wird.

In der Fig. 1 ist ergänzend dargestellt, dass die Brennkraftmaschine 1 auch eine Vorrichtung zur Entlüftung eines Zylinderkurbelgehäuses 37 des Verbrennungsmotors 2 umfasst, wie dies grundsätzlich bekannt ist. Hierzu ist eine Gehäuseentlüftungsleitung 38 vorgesehen, die aus einem die Kurbelwelle aufnehmenden Raum, den das Zylinderkurbelgehäuse 37 des Verbrennungsmotors 2 begrenzt, abgeht und in die eine Abscheidevorrichtung 39, die einem Abscheiden von flüssigen und festen Fremdkörpern aus über die Gehäuseentlüftungsleitung 38 geführtem Entlüftungsgas dient, integriert ist. Stromab der Abscheidevorrichtung 39 teilt sich die Gehäuseentlüftungsleitung 38 in einen ersten Teilstrang 38a, der stromauf des Frischgasverdichters 7 in den Frischgasstrang 6 mündet, während eine entsprechende Mündung des zweiten Teilstrang 38b stromab des Frischgasverdichters 7 und konkret auch stromab der Mündung der zweiten Spülgasleitung 27 angeordnet ist. In Abhängigkeit von der erzeugten Verdichtungsleistung des Frischgasverdichters 7 beziehungsweise davon, ob sich die Brennkraftmaschine in einem Saug- oder Verdichtungsbetrieb befindet, kann Entlüftungsgas über entweder den ersten Teilstrang 38a oder den zweiten Teilstrang 38b der Gehäuseentlüftungsleitung 38 in den Frischgasstrang 6 eingeleitet werden.

### Bezugszeichenliste

- 1: Brennkraftmaschine
- 2: Verbrennungsmotor
- 3: Brennraum des Verbrennungsmotors
- 4: Zylinder des Verbrennungsmotors
- 5: Kolben des Verbrennungsmotors
- 6: Frischgasstrang
- 6a: erster Abschnitt des Frischgasstrangs
- 6b: zweiter Abschnitt des Frischgasstrangs
- 7: Frischgasverdichter
- 8: Kraftstoffinjektor
- 9: Zündvorrichtung
- 10: Abgasstrang
- 11: Abgasturbine
- 12: erster Dreiwegekatalysator
- 13: Partikelfilter
- 14: zweiter Dreiwegekatalysator
- 15: Abgasrückführleitung
- 16: Temperatursensor
- 17: Abgasrückführventil
- 18: Differenzdrucksensor
- 19: Differenzdruckventil
- 20: Luftfilter
- 21: Luftmassensensor
- 22: Kraftstofftank
- 23: Tankleckdiagnosemodul
- 24: Kraftstoffdampffilter
- 25: Tankentlüftungsleitung
- 26: erste Spülgasleitung
- 27: zweite Spülgasleitung
- 28: Tankentlüftungsventil
- 29: Druck- und Temperatursensor
- 30: Rückschlagventil
- 31: Umgebungsluftleitung
- 32: Venturidüse
- 33: Treibleitung
- 34: Ladeluftkühler
- 35: Drosselklappe
- 36: Tankabsperrventil
- 37: Zylinderkurbelgehäuse des Verbrennungsmotors
- 38: Gehäuseentlüftungsleitung
- 38a: erster Teilstrang der Gehäuseentlüftungsleitung
- 38b: zweiter Teilstrang der Gehäuseentlüftungsleitung
- 39: Abscheidevorrichtung
- 40: Abgaskühler

## Patentansprüche

1. Verfahren zum Betreiben einer Brennkraftmaschine (1) mit
- einem Verbrennungsmotor (2),
- einem Frischgasstrang (6) zum Zuführen von Frischgas zu dem Verbrennungsmotor (2), wobei in den Frischgasstrang (6) ein Frischgasverdichter (7) und ein Differenzdruckventil (19) integriert sind, und
- einem Kraftstofftanksystem, das
- einen Kraftstofftank (22),
- einen Kraftstoffdampffilter (24), der in fluidleitender Verbindung mit der Umgebung steht,
- eine von dem Kraftstofftank (22) zu dem Kraftstoffdampffilter (24) führende Tankentlüftungsleitung (25),
- eine erste Spülgasleitung (26), die von dem Kraftstoffdampffilter (24) zu einem stromab des Differenzdruckventils (19) sowie stromauf des Frischgasverdichters (7) liegenden, ersten Abschnitt (6a) des Frischgasstrangs (6) führt, und
- eine zweite Spülgasleitung (27), die von dem Kraftstoffdampffilter (24) zu einem stromab des Frischgasverdichters (7) liegenden, zweiten Abschnitt (6b) des Frischgasstrangs (6) führt,
umfasst,
**dadurch gekennzeichnet, dass** zumindest zeitweise während eines Saugbetriebs der Brennkraftmaschine (1) mit Kraftstoffdampffilterspülung das Differenzdruckventil (19) zumindest teilweise geschlossen wird und dadurch Spülgas über die erste Spülgasleitung (26) in den ersten Abschnitt (6a) des Frischgasstrangs (6) eingeleitet wird.

2. Verfahren gemäß Anspruch 1, **dadurch gekennzeichnet, dass** zur Einstellung eines über die erste Spülgasleitung (26) zu führenden Spülgasmassenstroms die Schließstellung des Differenzdruckventils (19) variiert wird.

3. Verfahren gemäß Anspruch 1 oder 2, **dadurch gekennzeichnet, dass** zumindest zeitweise während des Saugbetriebs mit Kraftstoffdampffilterspülung Spülgas über die zweite Spülgasleitung (27) in den Frischgasstrang (6) eingeleitet wird.

4. Verfahren gemäß Anspruch 3, **dadurch gekennzeichnet, dass** zumindest zeitweise während des Saugbetriebs mit Kraftstoffdampffilterspülung Spülgas über die erste Spülgasleitung (26) und die zweite Spülgasleitung (27) in den Frischgasstrang (6) eingeleitet wird.

5. Verfahren gemäß Anspruch 3 oder 4, **dadurch gekennzeichnet, dass** während des Saugbetriebs mit Kraftstoffdampffilterspülung das Differenzdruckventil (19) nur dann zum Führen von Spülgas über die erste Spülgasleitung zumindest teilweise geschlossen wird, sofern ein in den Frischgasstrang (6) einzuleitender Sollgesamtspülgasmassenstrom oberhalb eines Grenzwerts, der ein maximal in dem Betriebszustand der Brennkraftmaschine über die zweite Spülgasleitung (27) führbaren Spülgasmassenstrom definiert, liegt.

6. Verfahren gemäß Anspruch 5, **dadurch gekennzeichnet, dass** während des Saugbetriebs mit Kraftstoffdampffilterspülung das Differenzdruckventil (19) weitestmöglich geöffnet wird, sofern der Sollgesamtspülgasmassenstrom unterhalb des Grenzwerts liegt.

7. Verfahren gemäß einem der vorhergehenden Ansprüche, **dadurch gekennzeichnet, dass** zumindest zeitweise während des Saugbetriebs mit Kraftstoffdampffilterspülung Abgas über eine Abgasrückführleitung (15), die von einem Abgasstrang (10) der Brennkraftmaschine (1) zu dem ersten Abschnitt (6a) des Frischgasstrangs (6), der stromab des Differenzdruckventils (19) sowie stromauf des Frischgasverdichters (7) liegt, führt, geführt wird, wobei eine Einstellung des über die Abgasrückführleitung (15) geführten Abgasmassenstroms mittels eines in die Abgasrückführleitung (15) integrierten Abgasrückführventils (17) durchgeführt wird.

8. Verfahren gemäß Anspruch 7, **dadurch gekennzeichnet, dass** ein Einfluss der Schließstellung des Differenzdruckventils (19) auf den Abgasmassenstrom mittels des Abgasrückführventils (17) kompensiert wird.

## Claims

1. Method for operating an internal combustion engine (1) comprising
- a combustion unit (2),
- a fresh gas system (6) for supplying fresh gas to the combustion unit (2), a fresh gas compressor (7) and a differential pressure valve (19) being integrated in the fresh gas system (6), and
- a fuel tank system which has
- a fuel tank (22),
- a fuel vapor filter (24) which is connected to the surroundings in a fluid-conducting manner,
- a tank vent line (25) leading from the fuel tank (22) to the fuel vapor filter (24),
- a first purge gas line (26) which leads from the fuel vapor filter (24) to a first portion (6a) of the fresh gas system (6) located downstream of the differential pressure valve (19) and upstream of the fresh gas compressor (7), and
- a second purge gas line (27) which leads from the fuel vapor filter (24) to a second portion (6b) of the fresh gas system (6) located downstream of the fresh gas compressor (7),
**characterized in that,** at least temporarily during suction operation of the internal combustion engine (1) with fuel vapor filter purging, the differential pressure valve (19) is at least partially closed and therefore purge gas is introduced into the first portion (6a) of the fresh gas system (6) via the first purge gas line (26).

2. Method according to claim 1, **characterized in that,** in order to adjust a purge gas mass flow to be lead via the first purge gas line (26), the closed position of the differential pressure valve (19) is varied.

3. Method according to claim 1 or 2, **characterized in that,** at least temporarily during suction operation with fuel vapor filter purging, purge gas is introduced into the fresh gas system (6) via the second purge gas line (27).

4. Method according to claim 3, **characterized in that,** at least temporarily during suction operation with fuel vapor filter purging, purge gas is introduced into the fresh gas system (6) via the first purge gas line (26) and the second purge gas line (27).

5. Method according to claim 3 or 4, **characterized in that** during suction operation with fuel vapor filter purging, the differential pressure valve (19) is only at least partially closed in order to lead purge gas via the first purge gas line if a target total purge gas mass flow to be introduced into the fresh gas system (6) is above a limit value which defines a maximum purge gas mass flow which can be lead via the second purge gas line (27) in the operating state of the internal combustion engine.

6. Method according to claim 5, **characterized in that** during suction operation with fuel vapor filter purging, the differential pressure valve (19) is opened as wide as possible if the target total purge gas mass flow is below the limit value.

7. Method according to any of the preceding claims, **characterized in that,** at least temporarily during suction operation with fuel vapor filter purging, exhaust gas is lead via an exhaust gas recirculation line (15) which leads from an exhaust gas system (10) of the internal combustion engine (1) to the first portion (6a) of the fresh gas system (6) which is located downstream of the differential pressure valve (19) and upstream of the fresh gas compressor (7), an adjustment of the exhaust gas mass flow lead via the exhaust gas recirculation line (15) being carried out by means of an exhaust gas recirculation valve (17) integrated in the exhaust gas recirculation line (15).

8. Method according to claim 7, **characterized in that** an influence of the closed position of the differential pressure valve (19) on the exhaust gas mass flow is compensated for by means of the exhaust gas recirculation valve (17).

## Revendications

1. Procédé permettant de faire fonctionner un moteur à combustion interne (1) comportant
- un moteur thermique (2),
- une ligne de gaz frais (6) pour l'amenée de gaz frais au moteur thermique (2), dans lequel un compresseur de gaz frais (7) et une soupape de pression différentielle (19) sont intégrés dans la ligne de gaz frais (6), et
- un système à réservoir de carburant qui comprend
- un réservoir de carburant (22),
- un filtre à vapeur de carburant (24) qui est en liaison d'une manière conductrice de fluide avec l'environnement,
- une conduite de dégazage de réservoir (25) conduisant du réservoir de carburant (22) au filtre à vapeur de carburant (24),
- une première conduite de gaz de balayage (26) qui conduit du filtre à vapeur de carburant (24) à une première section (6a) de la ligne de gaz frais (6) située en aval de la soupape de pression différentielle (19) et en amont du compresseur de gaz frais (7), et
- une seconde conduite de gaz de balayage (27) qui conduit du filtre à vapeur de carburant (24) à une seconde section (6b) de la ligne de gaz frais (6) située en aval du compresseur de gaz frais (7),
**caractérisé en ce que,** au moins temporairement pendant un mode de fonctionnement d'aspiration du moteur à combustion interne (1) avec balayage du filtre à vapeur de carburant, la soupape de pression différentielle (19) est fermée au moins partiellement et du gaz de balayage est ainsi introduit dans la première section (6a) de la ligne de gaz frais (6) par l'intermédiaire de la première conduite de gaz de balayage (26).

2. Procédé selon la revendication 1, **caractérisé en ce que,** pour le réglage d'un débit massique de gaz de balayage à conduire par l'intermédiaire de la première conduite de gaz de balayage (26), la position de fermeture de la soupape de pression différentielle (19) est modifiée.

3. Procédé selon la revendication 1 ou 2, **caractérisé en ce que,** au moins temporairement pendant le mode de fonctionnement d'aspiration avec balayage du filtre à vapeur de carburant, du gaz de balayage est introduit dans la ligne de gaz frais (6) par l'intermédiaire de la seconde conduite de gaz de balayage (27).

4. Procédé selon la revendication 3, **caractérisé en ce que,** au moins temporairement pendant le mode de fonctionnement d'aspiration avec balayage du filtre à vapeur de carburant, du gaz de balayage est introduit dans la ligne de gaz frais (6) par l'intermédiaire de la première conduite de gaz de balayage (26) et de la seconde conduite de gaz de balayage (27).

5. Procédé selon la revendication 3 ou 4, **caractérisé en ce que,** pendant le mode de fonctionnement d'aspiration avec balayage du filtre à vapeur de carburant, la soupape de pression différentielle (19) n'est fermée au moins partiellement pour conduire le gaz de balayage par l'intermédiaire de la première conduite de gaz de balayage que dans la mesure où un débit massique total de consigne de gaz de balayage à introduire dans la ligne de gaz frais (6) est supérieur à une valeur limite qui définit un débit massique maximal de gaz de balayage pouvant être conduit par l'intermédiaire de la seconde conduite de gaz de balayage (27) dans l'état de fonctionnement du moteur à combustion interne.

6. Procédé selon la revendication 5, **caractérisé en ce que,** pendant le mode de fonctionnement d'aspiration avec balayage du filtre à vapeur de carburant, la soupape de pression différentielle (19) est ouverte le plus largement possible dans la mesure où le débit massique total de consigne de gaz de balayage est inférieur à la valeur limite.

7. Procédé selon l'une des revendications précédentes,
**caractérisé en ce que,** au moins temporairement pendant le mode de fonctionnement d'aspiration avec balayage du filtre à vapeur de carburant, les gaz d'échappement sont conduits par l'intermédiaire d'une conduite de recyclage de gaz d'échappement (15) qui conduit d'une ligne de gaz d'échappement (10) du moteur à combustion interne (1) à la première section (6a) de la ligne de gaz frais (6) se trouvant en aval de la soupape de pression différentielle (19) ainsi qu'en amont du compresseur de gaz frais (7), dans lequel un réglage du débit massique de gaz d'échappement conduit par l'intermédiaire de la conduite de recyclage de gaz d'échappement (15) est réalisé au moyen d'une soupape de recyclage de gaz d'échappement (17) intégrée dans la conduite de recyclage de gaz d'échappement (15).

8. Procédé selon la revendication 7, **caractérisé en ce qu'**une influence de la position de fermeture de la soupape de pression différentielle (19) sur le débit massique de gaz d'échappement est compensée au moyen de la soupape de recyclage de gaz d'échappement (17).
